(19)

Europäisches
Patentamt
European
Patent Office
Office européen
des brevets

(11) **EP 4 550 618 A1**

(12) **EUROPEAN PATENT APPLICATION**
published in accordance with Art. 153(4) EPC

(43) Date of publication:
**07.05.2025 Bulletin 2025/19**

(21) Application number: **24832163.0**

(22) Date of filing: **10.01.2024**

(51) International Patent Classification (IPC):
*H02J 7/00* (2006.01)   *H01M 10/44* (2006.01)

(52) Cooperative Patent Classification (CPC):
**H01M 10/44; H02J 7/00**

(86) International application number:
**PCT/KR2024/000446**

(87) International publication number:
**WO 2025/005375 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.06.2023 KR 20230081593**

(71) Applicant: **LG Energy Solution, Ltd.
Seoul 07335 (KR)**

(72) Inventor: **YI, Jaeshin
Daejeon 34122 (KR)**

(74) Representative: **Hoffmann Eitle
Patent- und Rechtsanwälte PartmbB
Arabellastraße 30
81925 München (DE)**

(54) **METHOD AND DEVICE FOR CONTROLLING BATTERY CHARGING**

(57)    According to embodiments of the present invention, a battery charge control apparatus may include at least one processor; and a memory configured to store at least one instruction executed by the at least one processor.

The at least one instruction may include an instruction to, upon receiving user input information including a charging objective, derive a plurality of optimal charge maps that satisfy the charging objective based on battery state information and charger state information; an instruction to output information on each of the derived optimal charge maps through a predefined graphical user interface (GUI); and an instruction to, upon receiving a user selection signal for one of the optimal charge maps, control the battery to be charged using an optimal charge map corresponding to the user selection signal.

[Figure 2]

EP 4 550 618 A1

## Description

[Technical Field]

This application claims priority to and the benefit of Korean Patent Application No.10-2023-0081593 filed in the Korean Intellectual Property Office on June 26, 2023, the entire contents of which are incorporated herein by reference.
The present invention relates to a battery charge control apparatus and method, and more particularly, to a a battery charge control apparatus and method for controlling charging of a battery with an optimal charging method corresponding to a charging objective set by a user.

[Background Art]

A secondary battery is a battery that can be recharged and reused even after being discharged. The secondary battery can be used as an energy source for small devices such as mobile phones, tablet PCs and vacuum cleaners, and also used as an energy source for medium and large devices such as an energy storage system (ESS) for automobiles and smart grids.
The secondary battery is applied to a system in a form of an assembly such as a battery module in which a plurality of battery cells is connected in series and parallel or a battery pack in which battery modules are connected in series and parallel according to system requirements. A high-capacity battery system with multiple battery packs connected in parallel may be applied for medium-to-large devices such as electric vehicles to meet the required capacity of the device.
Recently, as the capacity of secondary batteries increases, fast charging technology has emerged that can charge batteries more quickly. In fast charging of the battery, a stepwise charging method is mainly used, in which charging is carried out with a high charge current at the beginning of charging and is carried out by gradually reducing the charge current as the SOC (State of Charge) or the voltage value of the battery increases. Here, the charge current can be adjusted based on the current temperature of the battery in consideration of safety of charging.
Generally, the charge current value during a battery charging process is determined by a pre-stored charge map or charge profile. In other words, the battery is charged according to a preset charging method and a user's selection regarding the charging method are limited.
Some charging devices provide users with choices regarding charge time, charge speed, etc., but the options for selection are very limited. In addition, when the battery is charged at high speed according to a user's selection, the lifespan of the battery may be shortened or the temperature of the battery may exceed the optimal range after charging is completed, resulting in lower output performance.
Accordingly, an appropriate charging control solution that can solve these problems is needed.

[Detailed Description of the Invention]

[Technical Problem]

To obviate one or more problems of the related art, embodiments of the present disclosure provide a battery charge control apparatus that controls charging of the battery in an optimal charging method corresponding to a charging objective set by a user.
To obviate one or more problems of the related art, embodiments of the present disclosure also provide a method of controlling battery charging using the battery charge control apparatus.

[Technical Solution]

In order to achieve the objective of the present disclosure, a battery charge control apparatus may include at least one processor; and a memory configured to store at least one instruction executed by the at least one processor.
The at least one instruction may include an instruction to, upon receiving user input information including a charging objective, derive a plurality of optimal charge maps that satisfy the charging objective based on battery state information and charger state information; an instruction to output information on each of the derived optimal charge maps through a predefined graphical user interface (GUI); and an instruction to, upon receiving a user selection signal for one of the optimal charge maps, control the battery to be charged using an optimal charge map corresponding to the user selection signal.
Here, the charging objective may include at least one charging objective value including one or more of a target charge amount, a target charge time, and a target battery temperature at the point at which charging is completed; or at least one charge priority item including one or more of the maximum charge amount, the minimum charge time, and the maximum performance.

The instruction to derive the plurality of optimal charge maps may include an instruction to derive optimal charge maps that satisfy the charging objective among a plurality of pre-stored charge maps.

The instruction to derive the plurality of optimal charge maps may include an instruction to generate charge prediction information for each of the plurality of pre-stored charge maps using a predefined battery behavior prediction model; and an instruction to select N optimal charge maps that satisfy the charging objective based on the generated charge prediction information.

The instruction to generate charge prediction information may include an instruction to predict one or more of a charge completion time, the charge amount at the charge completion time, the battery temperature at the charge completion time, and an accumulated amount of polarization values, when charging is performed according to the charge map.

The instruction to derive the plurality of optimal charge maps may include an instruction to select one or more of a first charge map that allows charging in a minimum time, a second charge map that allows charging with a maximum charge amount, a third charge map that satisfies a predefined maximum performance condition, and a fourth charge map that satisfies a predefined maximum lifespan condition, among the charge maps that satisfy the charging objective.

The instruction to derive the plurality of optimal charge maps may include an instruction to determine one or more of the first charge map, the third charge map, and the fourth charge map as an optimal charge map, in the instance that the charging objective is the target charge amount or the maximum charge amount; an instruction to determine one or more of the second charge map, the third charge map, and fourth charge map as an optimal charge map, in the instance that the charging objective is the target charge time or the minimum charge time; and an instruction to determine one or more of the first charge map, the second charge map, and the fourth charge map as an optimal charge map, in the instance that the charging objective is the target battery temperature at the charge completion time or the maximum performance.

The instruction to output information through the GUI may include an instruction to output identification information and charge prediction information for each of the N optimal charge maps.

The instruction to output information through the GUI may include an instruction to output each of the optimal charge maps according to predefined priorities.

The instruction to control the battery to be charged may include an instruction to control the battery to be charged using the optimal charge map which is defined as the first priority, in the instance that the user selection signal is not received within a predefined period of time.

According to another embodiment of the present disclosure, a battery charge control method, performed by a battery charge control apparatus, may include, upon receiving user input information including a charging objective, deriving a plurality of optimal charge maps that satisfy the charging objective based on battery state information and charger state information; outputting information on each of the derived optimal charge maps through a predefined graphical user interface (GUI); and upon receiving a user selection signal for one of the optimal charge maps, controlling the battery to be charged using an optimal charge map corresponding to the user selection signal.

Here, the charging objective may include at least one charging objective value including one or more of a target charge amount, a target charge time, and a target battery temperature at the point at which charging is completed; or at least one charge priority item including one or more of the maximum charge amount, the minimum charge time, and the maximum performance.

The deriving the plurality of optimal charge maps may include deriving optimal charge maps that satisfy the charging objective among a plurality of pre-stored charge maps.

The deriving the plurality of optimal charge maps may include generating charge prediction information for each of the plurality of pre-stored charge maps using a predefined battery behavior prediction model; and selecting N optimal charge maps that satisfy the charging objective based on the generated charge prediction information.

The generating charge prediction information may include predicting one or more of a charge completion time, the charge amount at the charge completion time, the battery temperature at the charge completion time, and an accumulated amount of polarization values, when charging is performed according to the charge map.

The deriving the plurality of optimal charge maps may include selecting one or more of a first charge map that allows charging in a minimum time, a second charge map that allows charging with a maximum charge amount, a third charge map that satisfies a predefined maximum performance condition, and a fourth charge map that satisfies a predefined maximum lifespan condition, among the charge maps that satisfy the charging objective.

The deriving the plurality of optimal charge maps may include determining one or more of the first charge map, the third charge map, and the fourth charge map as an optimal charge map, in the instance that the charging objective is the target charge amount or the maximum charge amount; determining one or more of the second charge map, the third charge map, and fourth charge map as an optimal charge map, in the instance that the charging objective is the target charge time or the minimum charge time; and determining one or more of the first charge map, the second charge map, and the fourth charge map as an optimal charge map, in the instance that the charging objective is the target battery temperature at the charge completion time or the maximum performance.

The outputting information through the GUI may include outputting identification information and charge prediction information for each of the N optimal charge maps.

The outputting information through the GUI may include outputting each of the optimal charge maps according to predefined priorities.

The controlling the battery to be charged may include controlling the battery to be charged using the optimal charge map which is defined as the first priority, in the instance that the user selection signal is not received within a predefined period of time.

[Advantageous Effects]

The embodiments of the present invention as described above may derive optimal charging maps that satisfy the charging goal set by the user and control battery charging through charge map selected by a user, and thus, can improve the user's freedom of choice regarding a charging method, as well as charging efficiency, performance, and residual value of the battery.

[Brief Description of the Drawings]

FIG. 1 is a block diagram for explaining a battery charging system according to embodiments of the present invention.

FIG. 2 is an operational flowchart of a battery charge control method according to embodiments of the present invention.

FIG. 3 is an example of a charge map according to embodiments of the present invention.

FIG. 4 is a reference diagram for explaining a battery behavior prediction model according to embodiments of the present invention.

FIG. 5 is a circuit diagram for explaining a voltage prediction model according to embodiments of the present invention.

FIG. 6 is a circuit diagram for explaining a temperature prediction model according to embodiments of the present invention.

FIG. 7 is an operational flowchart of a method for deriving an optimal charge map according to embodiments of the present invention.

FIGS. 8 to 10 are examples of screens of a user interface device according to embodiments of the present invention.

FIG. 11 is a block diagram of a battery charge control apparatus according to embodiments of the present invention.

    10: battery
    100: battery assembly
    200: battery charger
    300: battery charge control apparatus
    400: user interface device

[Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a minimum unit that serves to store power and a battery module refers to an assembly in which a plurality of battery cells is electrically connected.

A battery pack or battery rack refers to a system of a single structure that is assembled by connecting module units in series or in parallel, set by a battery manufacturer, which can be monitored and controlled by a battery management apparatus/system (BMS). A battery pack or battery rack may include several battery modules and a battery protection unit or any other protection device.

A battery bank refers to a group of large-scale battery rack systems configured by connecting several racks in parallel. A bank BMS for a battery bank may monitor and control rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

State of charge (SOC) refers to a current state of charge of a battery, represented in percent points [%], and State of Health (SOH) may be a current condition of a battery compared to its ideal or original conditions, represented in percent points [%].

Hereinafter, preferred embodiments according to the present invention will be described in more detail with reference to the attached drawings.

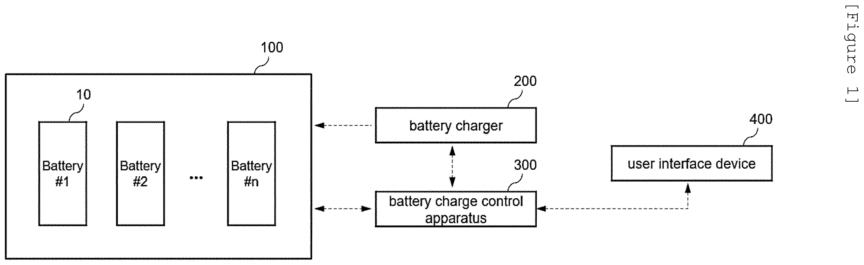

FIG. 1 is a block diagram for explaining a battery charging system according to embodiments of the present invention.

Referring to FIG. 1, the battery charging system may include a battery assembly 100, a battery charger 200, a battery charge control apparatus 300, and a user interface device 400.

The battery assembly 100 may include a plurality of battery cells 10, and the battery cells 10 may be electrically connected to each other.

The battery assembly 100 may be included in an electric means of transportation, such as an electric vehicle, but the scope of the present invention is not limited to these entities.

The battery charger 200 is a device that is electrically connected to the battery assembly 100 and performs battery charging. Here, the battery charger 200 may be included inside a device to which the battery assembly 100 is applied, or may be separately provided outside the device.

The battery charge control apparatus 300 may determine a charge control value and control the battery charger 200 so that the battery is charged according to the charge control value. Here, the charge control value may mean a charge current value, a charge voltage value, or a charge power value applied to the battery assembly 100 or an individual battery 10.

The battery charge control apparatus 300 may determine a charge control value using a pre-stored charge map. Here, the charge map may include data which includes predefined charge control values for each section of battery state values and each section of charge state values.

For example, the battery charge control apparatus 300 may determine a charge current value corresponding to the current charge state value (SOC value or voltage value) and the current temperature value of the battery in a charge map stored in a storage device, and control the battery charger 200 to charge the batery with the determined charge current value.

The battery charge control apparatus 300 may include a battery state information collection device that senses state values of the battery, or may be connected to a battery state information collection device. Here, the state values of the battery may include a voltage value, a current value, a temperature value, and an SOC of the battery.

The battery charge control apparatus 300 may be included in a battery system or a battery charger 200. For example, the battery charge control apparatus 300 may be provided inside a battery system and implemented in conjunction with a battery management system (BMS), or may be implemented by being included in a control system of a fast/rapid charging device.

The user interface device 400 is a device that may be operated by a user and may output specific information to a user or receive specific information input from a user through a predefined graphical user interface (GUI). For example, the user interface device 400 may correspond to a mobile phone or an Audio Video Navigation (AVN) device installed in an electric vehicle. However, the scope of the present invention is not limited to these entities.

The user interface device 400 may be connected to the battery charge control apparatus 300 through a network, receive specific information from the battery charge control apparatus 300, display the information through a GUI, and transmit specific information which is received from a user to the battery charge control apparatus 300.

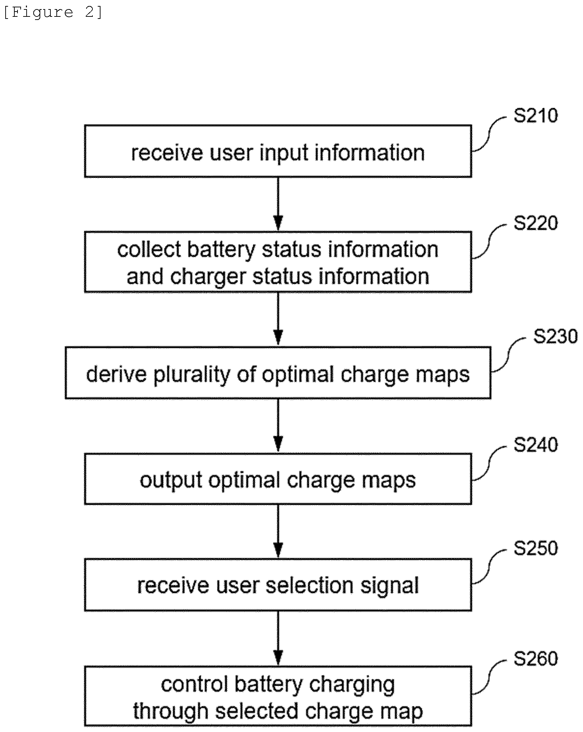

FIG. 2 is an operational flowchart of a battery charge control method according to embodiments of the present invention.

The battery charge control apparatus may receive user input information including a charging objective (S210).

In more detail, the user interface device may receive user input information including the charging objective from a user through a graphical user interface (GUI). Thereafter, the battery charge control apparatus may receive user input information from the user interface device.

In an embodiment, the charging objective may include at least one charging objective value including one or more of a target charge amount (SOC_target), a target charge time (t_target), and a target battery temperature at the point at which charging is completed (T_end_target). For example, the user interface device may receive input from the user of [SOC 80%] as the target charge amount, [charge time 20 minutes] as the target charge time, or [25 °C] as the target battery temperature, and transmit the input charging objective value to the battery charge control apparatus.

In another embodiment, the charging objective may include at least one charge priority item which includes one or more of the maximum charge amount, the minimum charge time, and the maximum performance. For example, the user interface device may receive a charge priority item corresponding to [maximum charge amount], [minimum charge time], or [maximum performance] from the user and transmit the input charge priority item to the battery charge control apparatus.

Upon receiving user input information, the battery charge control apparatus may collect battery status information and charger status information (S220). Here, the battery charge control apparatus may check the status information of the battery from a battery management system (BMS) of the battery system and check the status information of the charger from the battery charger.

Here, the battery status information may include one or more of a battery voltage value, a temperature value, State of charge (SOC), and State of Health (SOH). In addition, the charger status information may include one or more of the maximum charge current value, the maximum charge voltage value, the maximum charge power value, and the maximum charge time of the battery charger.

The battery charge control apparatus may derive a plurality of optimal charge maps that satisfy the charging objective input by the user based on the state information of the battery and the state information of the charger (S230). Here, the battery charge control apparatus may derive a predefined number (N) of optimal charge maps that satisfy the charging objective among a plurality of charge maps pre-stored in a storage device. For example, in the instance that the charging objective is [charge time 20 minutes], the battery charge control apparatus may select N charge maps that can complete charging within 20 minutes when charging is performed using the battery status information and the charger status information as charging conditions among a plurality of pre-stored charging maps and determine the selected charge maps as optimal charge maps.

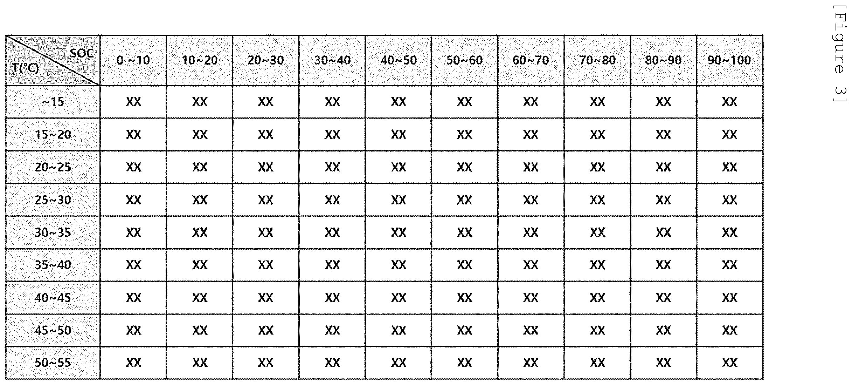

The charge map may correspond to data in which predefined charge control values are defined for each section of battery status values and for each section of charge status values. FIG. 3 is an example of a charge map according to embodiments of the present invention. Referring to FIG. 3, the charge map may be implemented as a table with predefined charge current values for each SOC section and temperature section. Here, the charge current value may be defined as a current value (A) or a charge rate (C-rate). Meanwhile, unlike what is shown in FIG. 3, the charge map may be implemented as a table with predefined charge control values for each voltage section and temperature section.

In embodiments, the battery charge control apparatus may derive optimal charge maps using a predefined battery behavior prediction model. Here, the battery behavior prediction model may be predefined to receive a charging objective, battery status information, and charger status information as input data and to output charge prediction information for each of the charge maps as output data.

The charge prediction information may include data indicating battery status information or charging-related information at the point at which charging is completed in the instance that charging is performed according to a specific charge map. Here, the charge prediction information may include one or more of the charge completion time, the battery charge amount at the time of charge completion, the battery temperature at the time of charge completion, and the accumulated amount of polarization values.

In other words, the battery behavior prediction model may perform charge simulations for each of the charge maps using the charging objective, the initial state value of the battery, and the limit value of the charger as charging conditions which is input by a user, and predict charge result values for each of the charge maps.

Thereafter, the battery charge control apparatus may determine the optimal charge map by selecting N charge maps that satisfy the charging objective based on charge prediction information according to the battery behavior prediction model.

The battery charge control apparatus may select one or more of a first charge map that allows charging in a minimum time (minimum time charge map), a second charge map that allows charging with the maximum charge amount (maximum charge amount charge map), a third charge map (maximum performance charge map) that satisfies a predefined maximum performance condition, and a fourth charge map (maximum lifespan charge map) that satisfies a predefined maximum lifespan condition, among the charge maps that satisfy the charging objective, and may determine the selected charge map as the optimal charge map.

For example, in the instance that the charging objective is [charge time 20 minutes], the battery charge control apparatus may select, among charge maps that can complete charging within 20 minutes, a charge map that allows charging with the maximum charge amount (a second charge map), a charge map with which the battery temperature at the point after charging is ended shows a value closest to the predefined optimal temperature value (a third charge map), and a charge map showing the lowest accumulated polarization value (a fourth charge map), and may determine the selected 3 charge maps as the optimal charge maps.

The battery charge control apparatus may output information about each of the optimal charge maps derived in S230 through a predefined GUI (S240).

The battery charge control apparatus may transmit identification information and charge prediction information for each of the derived N optimal charge maps to the user interface device, and the user interface device may display the received information through a predefined GUI. For example, the user interface device may output, through a display device, the charge completion time, SOC at the time of charge completion, battery temperature (or performance grade) at the time of charge completion, and the cumulative amount of polarization values (or life effect grade), for each of [maximum charge amount charge map], [maximum performance charge map], and [maximum lifespan charge map].

Thereafter, the battery charge control apparatus may receive a user selection signal for one of the optimal charge maps from the user interface device (S250).

Specifically, the user interface device may receive a selection signal for one of the optimal charge maps from the user through the GUI. Thereafter, the user interface device may transmit the user selection signal to the battery charge control apparatus.

The battery charge control apparatus may control the battery to be charged through the optimal charge map corresponding to the received user selection signal (S260). Here, the battery charge control apparatus may transmit the selected optimal charge map to the battery charger so that the battery is charged according to the optimal charge map. Alternatively, the battery charge control apparatus may check a charge control value corresponding to a current state value of the battery in the selected optimal charge map every unit time and may transmit the charge control value to the battery charger, so that the battery can be charged according to the corresponding optimal charge map.

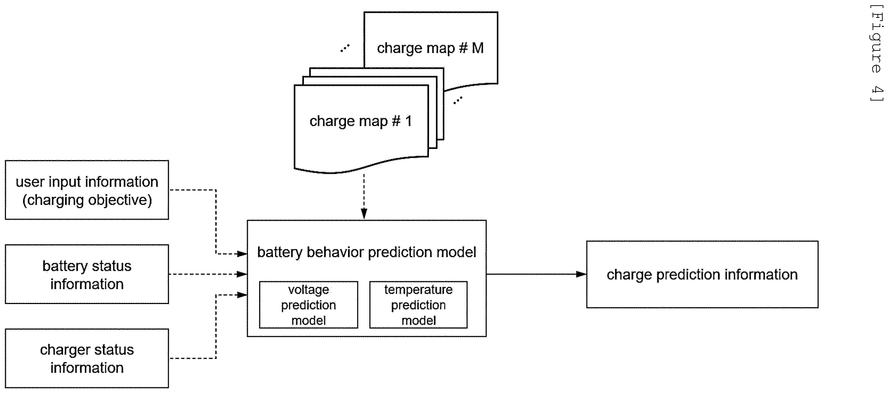

FIG. 4 is a reference diagram for explaining a battery behavior prediction model according to embodiments of the present invention.

The battery behavior prediction model according to embodiments of the present invention may receive a charging objective, battery status information, and charger status information as input data, and output charge predicttion information for each of the charge maps (#1 to #M) as output data.

The charging objective, as a charging target value input by a user, may correspond to a target charge amount (SOC_target), a target charge time (t_target), or a target battery temperature at the point of completion of charging (T_end_target). Alternatively, the charging objective, as a charge priority item input by a user, may correspond to the maximum charge amount, the minimum charge time, or the maximum performance.

The battery status information may include one or more of a battery voltage value, a temperature value, SOC, and SOH.

The charger status information may include one or more of the maximum charge current value, the maximum charge voltage value, the maximum charge power value, and the maximum charge time of the battery charger.

The M charge maps (#1 to #M) may be pre-stored in a storage device. Here, predefined charge maps corresponding to various scenarios may be pre-stored in the storage device. For example, charge maps corresponding to various charger outputs (50kW, 100kW, 250kW, 350kW, etc.), charge maps corresponding to various SOCs at initial charging (0, 20, 40, etc.), charge maps corresponding to various temperatures at initial charging (0, 15, 25, 40, etc.) may be pre-stored in the storage device.

The battery behavior prediction model may output charge prediction information for each of the stored charge maps (#1 to #M) based on the input data (charging objective, battery status information, charger status information).

Specifically, the battery behavior prediction model may proceed with charge simulation according to the charge map (#1) with battery status information as the initial value and calculate the battery voltage value, SOC, amount of heat generation, and accumulated amount of polarization value (difference between a voltage value and an open-circuit voltage value) at every unit time. During the charge simulation process, as the limit value of the battery charger (maximum charge current value, maximum charge voltage value, or maximum charge power value) is reached, the battery behavior prediction model may change the charge control value at that point to the limit value of the battery charger proceed with charge simulation.

The battery behavior prediction model may include a predefined voltage prediction model and a temperature prediction model for calculating charging prediction information.

The voltage prediction model may be predefined to output a battery voltage value, SOC, amount of heat generation (Q), and a polarization value based on the SOC, the SOH, the battery temperature (T), and the charge current value at a previous time point. Additionally, the temperature prediction model may be predefined to output the battery temperature (T) based on the battery temperature (T) and the amount of heat generation (Q) at a previous time point. Here, the voltage prediction model and the temperature prediction model may be linked to each other, share result values as to amount of heat generation (Q) and battery temperature (T), and update output values every unit time.

During the charge simulation process, in the instance the charging objective is reached or the maximum charge time of the battery charger is exceeded, the battery behavior prediction model may terminate the charge simulation at that point, and store the accumulated charge time, battery charge amount, the battery temperature and the accumulated amount of polarization value at the end of charging. Here, the battery behavior prediction model may output the stored result value as charge prediction information of the corresponding charge map (#1).

Thereafter, the battery behavior prediction model may sequentially perform charge simulation for the remaining charge maps (#2 to #M) and generate charge prediction information for each of the charge maps (#2 to #M).

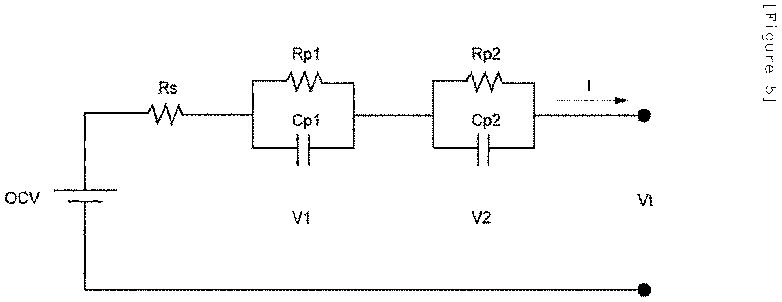

FIG. 5 is a circuit diagram for explaining a voltage prediction model according to embodiments of the present invention.

The voltage prediction model according to embodiments of the present invention may be included in the battery behavior prediction model.

The voltage prediction model may be defined as an RC equivalent circuit including a battery, one or more resistors, and one or more capacitors. For example, the voltage prediction model may be implemented as an equivalent circuit model including a battery, a plurality of resistors (Rs, Rp1, Rp2), and a plurality of capacitors (Cp1, Cp2), as shown in FIG. 5.

Here, the battery voltage (Vt), amount of heat generation (Q), and a polarization value (Vpol) may be calculated based on equations 1 to 3 below, and the SOC may be calculated based on a predefined open circuit voltage (OCV) - SOC correspondence curve.

[Equation 1]

$$Vt = OCV - I \times Rs - V1 - V2$$

[Equation 2]

$$Q = I \times (OCV - Vt)$$

[Equation 3]

$$Vpol = \int_{SOC0}^{SOCend} |OCV - Vt|\, dSOC$$

Meanwhile, the equivalent circuit model shown in FIG. 5 is an example for understanding the present invention, and the voltage prediction model included in the battery behavior prediction model may be implemented differently from the equivalent circuit model in FIG. 5 or be implemented as an electrochemical model.

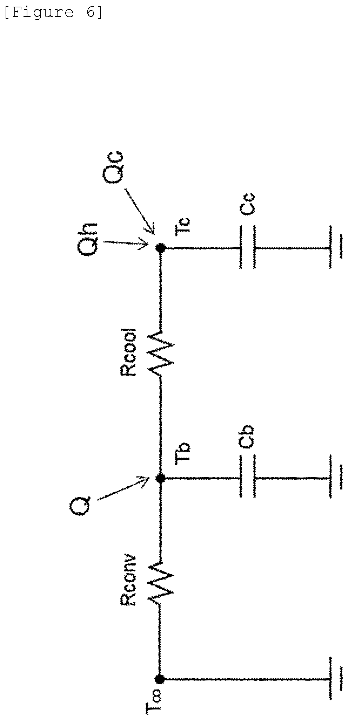

FIG. 6 is a circuit diagram for explaining a temperature prediction model according to embodiments of the present invention.

The temperature prediction model according to embodiments of the present invention may be included in the battery behavior prediction model.

The temperature prediction model may be defined as an RC equivalent circuit including a battery, one or more resistors, and one or more capacitors. For example, the temperature prediction model may be implemented as an equivalent circuit model including a battery, a plurality of resistors (Rconv, Rcool), and a plurality of capacitors (Cb, Cc), as shown in FIG. 6.

The battery temperature (Tb) may be calculated based on Equations 4 and 5 below.

[Equation 4]

$$\mathbf{Cb} \cdot \frac{dTb}{dt} = \frac{1}{Rconv}(T_\infty - \mathbf{Tb}) + \frac{1}{Rcool}(\mathbf{Tc} - \mathbf{Tb}) + Q$$

Here, the amount of heat generation in the battery (Q) may be provided from the voltage prediction model in FIG. 5.

[Equation 5]

$$\mathbf{Cc} \cdot \frac{dTc}{dt} = \frac{1}{Rconv}(\mathbf{Tc} - \mathbf{Tb}) + Qh + Qc$$

($T_\infty$ is an outside temperature, Rconv is the thermal resistance between the outside air and the battery, Q is the amount of heat generation in the battery, Cb is the heat capacity of the battery, Tb is battery temperature, Tc is the coolant temperature, and Rcool is the thermal resistance between the battery and the coolant, Qh is the amount of heat gain of the coolant, Qc is the amount of heat loss of the coolant, and Cc is the heat capacity of the coolant)

Meanwhile, the equivalent circuit model shown in FIG. 6 is an example for understanding the present invention, and the temperature prediction model included in the battery behavior prediction model may be implemented differently from the equivalent circuit model in FIG. 6 or be implemented as an electrochemical model.

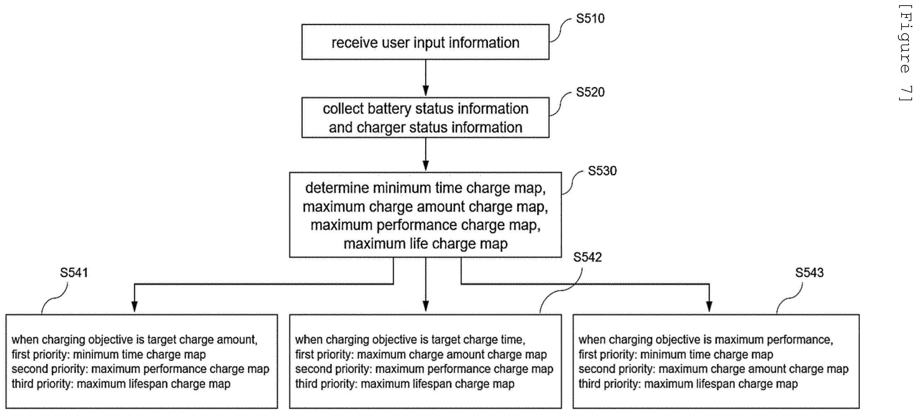

FIG. 7 is an operational flowchart of a method for deriving an optimal charge map according to embodiments of the present invention.

The battery charge control apparatus may receive user input information including a charging objective (S510).

The charging objective may include a charging objective value, including one or more of a target charge amount (SOC_target), a target charge time (t_target), and a target battery temperature at the end of charging (T_end_target), or the charging objective may include charge priority items including one or more of the maximum charge amount, the minimum charge time, and the maximum performance.

Upon receiving user input information, the battery charge control apparatus may collect battery status information and charger status information (S520).

The battery charge control apparatus may derive N optimal charge maps that satisfy the charging objective input by a user based on the battery status information and the charger status information (S530).

Here, the battery charge control apparatus may select, using the predefined battery behavior prediction model, one or more of a first charge map that allows charging in a minimum time (minimum time charge map), a second charge map that allows charging with the maximum charge amount (maximum charge amount charge map), and a third charge map (maximum performance charge map) that satisfies a predefined maximum performance condition and a fourth charge map (maximum lifespan charge map) that satisfies a predefined maximum lifespan condition, among the charge maps that satisfy the charging objective, and determine the selected charge map as the optimal charge map.

Here, the maximum performance charge map (third charge map) may be determined as a charge map in which the battery temperature after the end of charging is closest to the target battery temperature, or a charge map which shows the battery temperature after the end of charging closest to a predefined optimal temperature value. In addition, the maximum lifespan charge map (fourth charge map) may be determined as a charge map showing the lowest cumulative amount of polarization values.

In the instance that the charging objective entered by the user is the target charge amount or the maximum charge amount, the battery charge control apparatus may determine a first charge map (minimum time charge map), a third charge map (maximum performance charge map), and a fourth charge map (maximum lifespan charge map) as the optimal charge maps (S541).

In the instance that the charging objective entered by the user is the target charge time or the minimum charge time, the battery charge control apparatus may determine a second charge map (maximum charge amount charge map), a third charge map (maximum performance charge map), and a fourth charge map (maximum lifespan charge map) as the optimal charge maps (S542).

In the instance that the charging objective input by the user is the target battery temperature at the time of completion of charging or the maximum performance, the battery charge control apparatus may determine a first charge map (minimum time charge map), a second charge map (maximum charge amount charge map), and the fourth charge map (maximum lifespan charge map) as the optimal charge maps (S543).

The battery charge control apparatus may assign priorities to a plurality of selected optimal charge maps.

In the instance that the charging objective entered by the user is the target charge amount or the maximum charge amount, the battery charge control apparatus may define the priorities of the three selected optimal selection maps as in the order of the first charge map (minimum time charge map), the third charge map ( maximum performance charge map), and the fourth charge map (maximum lifespan charge map).

In the instance that the charging objective entered by the user is the target battery temperature at the time of completion of charging or maximum performance, the battery charge control apparatus may define the priorities of the three selected optimal selection maps as in the order of the second charge map (maximum charge amount charge map), the third charge map (maximum performance charge map), and the fourth charge map (maximum lifespan charge map).

In the instance that the charging objective entered by the user is the target charge time or the minimum charge time, the battery charge control apparatus may define the priorities of the three selected optimal selection maps as in the order of the first charge map (minimum time charge map), the second charge map (maximum charge amount charge map), and the fourth charge map (maximum lifespan charge map).

The battery charge control apparatus may output information about each of the derived optimal charge maps through a predefined GUI. Here, the battery charge control apparatus may output the selected optimal charge maps in order according to predefined priorities.

Thereafter, the battery charge control apparatus may receive a user selection signal for one of the optimal charge maps from the user interface device.

The battery charge control apparatus may control the battery to be charged using the optimal charge map corresponding to the received user selection signal.

If the user selection signal is not received within a predefined period of time (for example, within 10 seconds), the battery charge control apparatus may control the battery to be charged through the optimal charge map defined as the first priority.

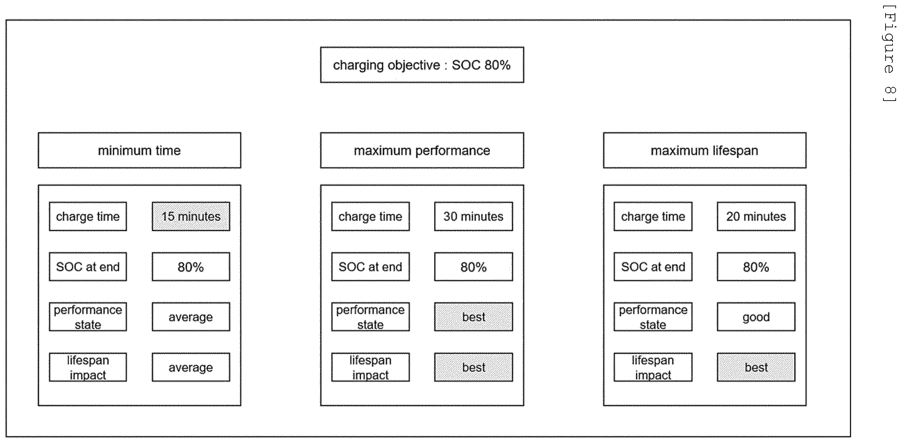

FIGS. 8 to 10 are examples of screens of a user interface device according to embodiments of the present invention.

Referring to FIG. 8, when the charging objective input by a user is the target charge amount (SOC 80%), the battery charge control apparatus may determine the minimum time charge map, the maximum performance charge map, and the maximum lifespan charge map as the optimal charge map. Here, the battery charge control apparatus may define the priorities of the three selected optimal selection maps in the following order: the minimum time charge map, the maximum performance charge map, and the maximum lifespan charge map.

The battery charge control apparatus may transmit information about each of the optimal charge maps to the user interface device, and the user interface device may display identification information and charge prediction information of each optimal charge map in order of priority, as shown in FIG. 8.

The charge prediction information may be output as is for each item, or at least part of it may be output as a grade. For example, as shown in FIG. 8, the battery temperature value at the time of completion of charging may be classified into one of best, good, average, and bad grades depending on the size, and the classification result may be output on [performance state]. In addition, the accumulated amount of polarization value may be classified into one of the best, good, average, and bad grades depending on the size and the classification result may be output on [lifespan impact].

Thereafter, the user interface device may receive a selection signal for one of the optimal charge maps from a user through the GUI. Thereafter, the user interface device may transmit the user selection signal to the battery charge control apparatus. If a user selection signal is not input within a predefined time (for example, within 10 seconds), the minimum time charge map defined as first priority may be treated as selected by the user.

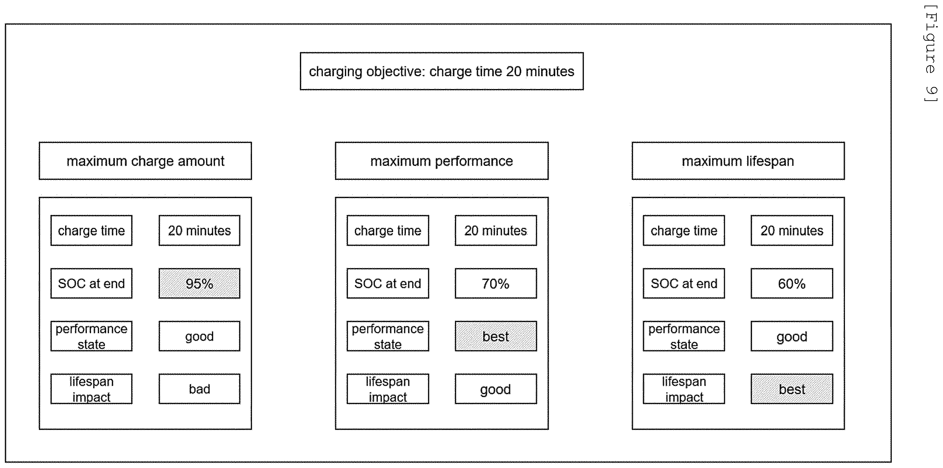

FIG. 9 is an example of a screen when the charging objective input by a user is the target charge time (20 minutes). When the charging objective is the target charge time, the battery charge control apparatus may determine the maximum charge amount charge map, the maximum performance charge map, and the maximum lifespan charge map as the optimal charge maps. Here, the battery charge control apparatus may define the priorities of the three selected optimal charge maps in the following order: the maximum charge amount charge map, the maximum performance charge map, and the maximum lifespan charge map. Thereafter, as shown in FIG. 9, the user interface device may display identification information and charge prediction information of each of the optimal charge maps according to the priorities.

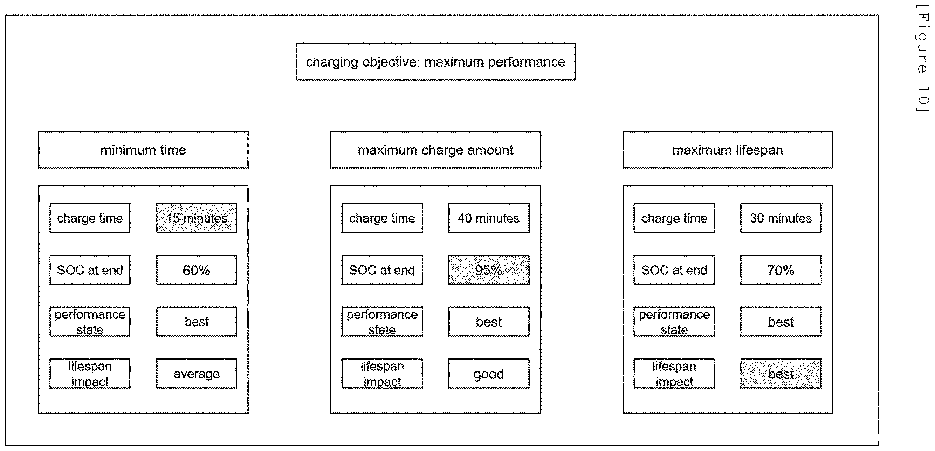

FIG. 10 is an example of a screen when the charging objective entered by a user is maximum performance among charge priority items. When the charging objective is [maximum performance], the battery charge control apparatus may determine the minimum time charge map, the maximum charge amount charge map, and the maximum lifespan charge map as the optimal charge maps. Here, the battery charge control apparatus may define the priorities of the three selected optimal charge maps in the following order: the minimum time charge map, the maximum charge amount charge map, and the maximum lifespan charge map. Thereafter, as shown in FIG. 10, the user interface device may display identification information and charge prediction information of each of the optimal charge maps according to the priorities.

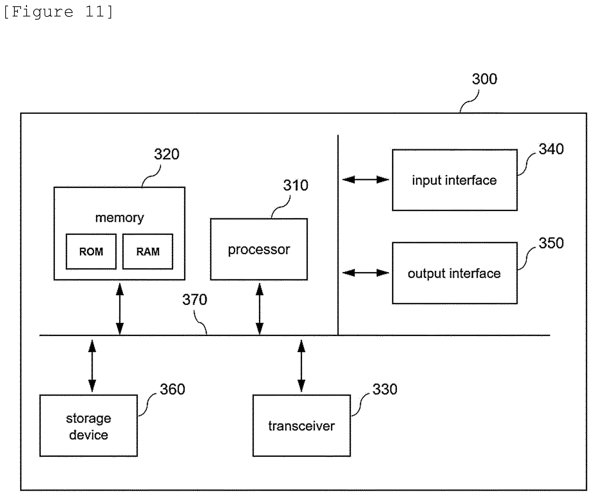

FIG. 11 is a block diagram of a battery charge control apparatus according to embodiments of the present invention.

The battery charge control apparatus 300 may include at least one processor 310, a memory 320 that stores at least one instruction executed by the processor, and a transceiver 330 connected to a network to perform communication.

The at least one instruction may include an instruction to, upon receiving user input information including a charging objective, collect battery state information and charger state information; an instruction to derive a plurality of optimal charge maps that satisfy the charging objective based on the battery state information and the charger state information; an instruction to output information on each of the derived optimal charge maps through a predefined graphical user interface (GUI); and an instruction to, upon receiving a user selection signal for one of the optimal charge maps, control the battery to be charged using an optimal charge map corresponding to the user selection signal.

Here, the charging objective may include at least one charging objective value including one or more of a target charge amount, a target charge time, and a target battery temperature at the point at which charging is completed; or at least one charge priority item including one or more of the maximum charge amount, the minimum charge time, and the maximum performance.

The instruction to derive the plurality of optimal charge maps may include an instruction to derive optimal charge maps that satisfy the charging objective among a plurality of pre-stored charge maps.

The instruction to derive the plurality of optimal charge maps may include an instruction to generate charge prediction information for each of the plurality of pre-stored charge maps using a predefined battery behavior prediction model; and an instruction to select N optimal charge maps that satisfy the charging objective based on the generated charge prediction information.

The instruction to generate charge prediction information may include an instruction to predict one or more of a charge completion time, the charge amount at the charge completion time, the battery temperature at the charge completion time, and an accumulated amount of polarization values, when charging is performed according to the charge map.

The instruction to derive the plurality of optimal charge maps may include an instruction to select one or more of a first charge map that allows charging in a minimum time, a second charge map that allows charging with a maximum charge amount, a third charge map that satisfies a predefined maximum performance condition, and a fourth charge map that satisfies a predefined maximum lifespan condition, among the charge maps that satisfy the charging objective.

The instruction to derive the plurality of optimal charge maps may include an instruction to determine one or more of the first charge map, the third charge map, and the fourth charge map as an optimal charge map, in the instance that the charging objective is the target charge amount or the maximum charge amount; an instruction to determine one or more of the second charge map, the third charge map, and fourth charge map as an optimal charge map, in the instance that the charging objective is the target charge time or the minimum charge time; and an instruction to determine one or more of the first charge map, the second charge map, and the fourth charge map as an optimal charge map, in the instance that the charging objective is the target battery temperature at the charge completion time or the maximum performance.

The instruction to output information through the GUI may include an instruction to output identification information and charge prediction information for each of the N optimal charge maps.

The instruction to output information through the GUI may include an instruction to output each of the optimal charge maps according to predefined priorities.

The instruction to control the battery to be charged may include an instruction to control the battery to be charged using the optimal charge map which is defined as the first priority, in the instance that the user selection signal is not received within a predefined period of time.

The battery charge control apparatus 300 may further include an input interface 340, an output interface 350, a storage device 360, and the like. Respective components included in the battery charge control apparatus 300 may be connected by a bus 370 to communicate with each other.

Here, the processor 310 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

**Claims**

1. A battery charge control apparatus, the apparatus comprising:

    at least one processor; and
    a memory configured to store at least one instruction executed by the at least one processor,
    wherein the at least one instruction includes:

        an instruction to, upon receiving user input information including a charging objective, derive a plurality of optimal charge maps that satisfy the charging objective based on battery state information and charger state information;
        an instruction to output information on each of the derived optimal charge maps through a predefined graphical user interface (GUI); and
        an instruction to, upon receiving a user selection signal for one of the optimal charge maps, control the battery to be charged using an optimal charge map corresponding to the user selection signal.

2. The apparatus of claim 1, wherein the charging objective includes:

    at least one charging objective value including one or more of a target charge amount, a target charge time, and a target battery temperature at the point at which charging is completed; or
    at least one charge priority item including one or more of the maximum charge amount, the minimum charge time, and the maximum performance.

3. The apparatus of claim 1, wherein the instruction to derive the plurality of optimal charge maps includes an instruction to derive optimal charge maps that satisfy the charging objective among a plurality of pre-stored charge maps.

4. The apparatus of claim 3, wherein the instruction to derive the plurality of optimal charge maps includes:

    an instruction to generate charge prediction information for each of the plurality of pre-stored charge maps using a predefined battery behavior prediction model; and
    an instruction to select N optimal charge maps that satisfy the charging objective based on the generated charge prediction information.

5. The apparatus of claim 4, wherein the instruction to generate charge prediction information includes an instruction to predict one or more of a charge completion time, the charge amount at the charge completion time, the battery temperature at the charge completion time, and an accumulated amount of polarization values, when charging is performed according to the charge map.

6. The apparatus of claim 4, wherein the instruction to derive the plurality of optimal charge maps includes:
    an instruction to select one or more of a first charge map that allows charging in a minimum time, a second charge map that allows charging with a maximum charge amount, a third charge map that satisfies a predefined maximum performance condition, and a fourth charge map that satisfies a predefined maximum lifespan condition, among the charge maps that satisfy the charging objective.

7. The apparatus of claim 6, wherein the instruction to derive the plurality of optimal charge maps includes:

    an instruction to determine one or more of the first charge map, the third charge map, and the fourth charge map as an optimal charge map, in the instance that the charging objective is the target charge amount or the maximum charge amount;
    an instruction to determine one or more of the second charge map, the third charge map, and the fourth charge map as an optimal charge map, in the instance that the charging objective is the target charge time or the minimum charge time; and

an instruction to determine one or more of the first charge map, the second charge map, and the fourth charge map as an optimal charge map, in the instance that the charging objective is the target battery temperature at the charge completion time or the maximum performance.

8. The apparatus of claim 4, wherein the instruction to output information through the GUI includes an instruction to output identification information and charge prediction information for each of the N optimal charge maps.

9. The apparatus of claim 8, wherein the instruction to output information through the GUI includes an instruction to output each of the optimal charge maps according to predefined priorities.

10. The apparatus of claim 9, wherein the instruction to control the battery to be charged includes an instruction to control the battery to be charged using the optimal charge map which is defined as the first priority, in the instance that the user selection signal is not received within a predefined period of time.

11. A battery charge control method performed by a battery charge control apparatus, the method comprising:

upon receiving user input information including a charging objective, deriving a plurality of optimal charge maps that satisfy the charging objective based on battery state information and charger state information;

outputting information on each of the derived optimal charge maps through a predefined graphical user interface (GUI); and

upon receiving a user selection signal for one of the optimal charge maps, controlling the battery to be charged using an optimal charge map corresponding to the user selection signal.

12. The method of claim 11, wherein the charging objective includes:

at least one charging objective value including one or more of a target charge amount, a target charge time, and a target battery temperature at the point at which charging is completed; or

at least one charge priority item including one or more of the maximum charge amount, the minimum charge time, and the maximum performance.

13. The method of claim 11, wherein the deriving the plurality of optimal charge maps includes deriving optimal charge maps that satisfy the charging objective among a plurality of pre-stored charge maps.

14. The method of claim 13, wherein the deriving the plurality of optimal charge maps includes:

generating charge prediction information for each of the plurality of pre-stored charge maps using a predefined battery behavior prediction model; and

selecting N optimal charge maps that satisfy the charging objective based on the generated charge prediction information.

15. The method of claim 14, wherein the generating charge prediction information includes predicting one or more of a charge completion time, the charge amount at the charge completion time, the battery temperature at the charge completion time, and an accumulated amount of polarization values, when charging is performed according to the charge map.

16. The method of claim 14, wherein the deriving the plurality of optimal charge maps includes:
selecting one or more of a first charge map that allows charging in a minimum time, a second charge map that allows charging with a maximum charge amount, a third charge map that satisfies a predefined maximum performance condition, and a fourth charge map that satisfies a predefined maximum lifespan condition, among the charge maps that satisfy the charging objective.

17. The method of claim 16, wherein the deriving the plurality of optimal charge maps includes:

determining one or more of the first charge map, the third charge map, and the fourth charge map as an optimal charge map, in the instance that the charging objective is the target charge amount or the maximum charge amount;

determining one or more of the second charge map, the third charge map, and the fourth charge map as an optimal charge map, in the instance that the charging objective is the target charge time or the minimum charge time; and

determining one or more of the first charge map, the second charge map, and the fourth charge map as an optimal charge map, in the instance that the charging objective is the target battery temperature at the charge completion time or the maximum performance.

18. The method of claim 14, wherein the outputting information through the GUI includes outputting identification information and charge prediction information for each of the N optimal charge maps.

19. The method of claim 18, wherein the outputting information through the GUI includes outputting each of the optimal charge maps according to predefined priorities.

20. The method of claim 19, wherein the controlling the battery to be charged includes controlling the battery to be charged using the optimal charge map which is defined as the first priority, in the instance that the user selection signal is not received within a predefined period of time.

[Figure 1]

400 — user interface device

200 — battery charger

300 — battery charge control apparatus

100

10 — Battery #1

Battery #2

Battery #n

[Figure 2]

```
┌─────────────────────────────────────┐
│    receive user input information    │  ─── S210
└─────────────────────────────────────┘
                    │
                    ▼
┌─────────────────────────────────────┐
│    collect battery status information │  ─── S220
│    and charger status information     │
└─────────────────────────────────────┘
                    │
                    ▼
┌─────────────────────────────────────┐
│  derive plurality of optimal charge maps │  ─── S230
└─────────────────────────────────────┘
                    │
                    ▼
┌─────────────────────────────────────┐
│      output optimal charge maps      │  ─── S240
└─────────────────────────────────────┘
                    │
                    ▼
┌─────────────────────────────────────┐
│     receive user selection signal    │  ─── S250
└─────────────────────────────────────┘
                    │
                    ▼
┌─────────────────────────────────────┐
│       control battery charging       │  ─── S260
│     through selected charge map      │
└─────────────────────────────────────┘
```

[Figure 3]

| T(°C) \ SOC | 0~10 | 10~20 | 20~30 | 30~40 | 40~50 | 50~60 | 60~70 | 70~80 | 80~90 | 90~100 |
|---|---|---|---|---|---|---|---|---|---|---|
| ~15 | XX | XX | XX | XX | XX | XX | XX | XX | XX | XX |
| 15~20 | XX | XX | XX | XX | XX | XX | XX | XX | XX | XX |
| 20~25 | XX | XX | XX | XX | XX | XX | XX | XX | XX | XX |
| 25~30 | XX | XX | XX | XX | XX | XX | XX | XX | XX | XX |
| 30~35 | XX | XX | XX | XX | XX | XX | XX | XX | XX | XX |
| 35~40 | XX | XX | XX | XX | XX | XX | XX | XX | XX | XX |
| 40~45 | XX | XX | XX | XX | XX | XX | XX | XX | XX | XX |
| 45~50 | XX | XX | XX | XX | XX | XX | XX | XX | XX | XX |
| 50~55 | XX | XX | XX | XX | XX | XX | XX | XX | XX | XX |

[Figure 4]

[Figure 5]

[Figure 6]

[Figure 7]

EP 4 550 618 A1

S510

receive user input information

S520

collect battery status information
and charger status information

S530

determine minimum time charge map,
maximum charge amount charge map,
maximum performance charge map,
maximum life charge map

S541

S542

S543

when charging objective is target charge amount,
first priority: minimum time charge map
second priority: maximum performance charge map
third priority: maximum lifespan charge map

when charging objective is target charge time,
first priority: maximum charge amount charge map
second priority: maximum performance charge map
third priority: maximum lifespan charge map

when charging objective is maximum performance,
first priority: minimum time charge map
second priority: maximum charge amount charge map
third priority: maximum lifespan charge map

[Figure 8]

[Figure 9]

[Figure 10]

charging objective: maximum performance

| minimum time | | maximum charge amount | | maximum lifespan | |
|---|---|---|---|---|---|
| charge time | 15 minutes | charge time | 40 minutes | charge time | 30 minutes |
| SOC at end | 60% | SOC at end | 95% | SOC at end | 70% |
| performance state | best | performance state | best | performance state | best |
| lifespan impact | average | lifespan impact | good | lifespan impact | best |

[Figure 11]

| | INTERNATIONAL SEARCH REPORT | International application No. |
|---|---|---|
| | | **PCT/KR2024/000446** |

**A. CLASSIFICATION OF SUBJECT MATTER**

**H02J 7/00**(2006.01)i; **H01M 10/44**(2006.01)i

According to International Patent Classification (IPC) or to both national classification and IPC

**B. FIELDS SEARCHED**

Minimum documentation searched (classification system followed by classification symbols)

H02J 7/00(2006.01); B60L 53/62(2019.01); B60L 53/66(2019.01); G01C 21/26(2006.01); G06F 9/44(2006.01); G06N 3/08(2006.01); G08G 1/00(2006.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 사용자(user), 최적(optimum), 맵(map), 목표(target), 예측(predict)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0008238 A (HYUNDAI MOTOR COMPANY et al.) 20 January 2022 (2022-01-20) See paragraphs [0110]-[0163], claims 1-20, and figures 7-19. | 1-20 |
| Y | KR 10-2014-0045405 A (MICROSOFT CORPORATION) 16 April 2014 (2014-04-16) See paragraphs [0053]-[0085], claims 1-16, and figures 7-11. | 1-20 |
| A | JP 2019-091433 A (HONDA MOTOR CO., LTD.) 13 June 2019 (2019-06-13) See paragraphs [0035]-[0052], and figures 2-4. | 1-20 |
| A | JP 2014-128039 A (BRAVERIDGE CO., LTD.) 07 July 2014 (2014-07-07) See paragraphs [0064]-[0090], and figure 2. | 1-20 |
| A | KR 10-2023-0069786 A (SAMSUNG ELECTRONICS CO., LTD.) 19 May 2023 (2023-05-19) See paragraphs [0056]-[0059], and figure 4. | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2024** | **18 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000446**

| Patent document cited in search report | | | Publication date (day/month/year) | Patent family member(s) | | | Publication date (day/month/year) |
|---|---|---|---|---|---|---|---|
| KR | 10-2022-0008238 | A | 20 January 2022 | CN | 116194327 | A | 30 May 2023 |
| | | | | EP | 4166380 | A1 | 19 April 2023 |
| | | | | US | 2023-0311700 | A1 | 05 October 2023 |
| | | | | WO | 2022-015017 | A1 | 20 January 2022 |
| KR | 10-2014-0045405 | A | 16 April 2014 | AU | 2012-271103 | A1 | 20 December 2012 |
| | | | | AU | 271103 | B2 | 19 January 2017 |
| | | | | BR | 112013031986 | A2 | 20 December 2016 |
| | | | | BR | 112013031986 | A8 | 06 February 2018 |
| | | | | BR | 112013031986 | B1 | 30 March 2021 |
| | | | | CA | 2838397 | A1 | 20 December 2012 |
| | | | | CA | 2838397 | C | 15 February 2022 |
| | | | | CN | 103597423 | A | 19 February 2014 |
| | | | | CN | 103597423 | B | 14 September 2016 |
| | | | | EP | 2721460 | A2 | 23 April 2014 |
| | | | | EP | 2721460 | B1 | 20 March 2019 |
| | | | | JP | 2014-523224 | A | 08 September 2014 |
| | | | | JP | 6126085 | B2 | 10 May 2017 |
| | | | | MX | 2013014794 | A | 24 January 2014 |
| | | | | RU | 2013155599 | A | 20 June 2015 |
| | | | | RU | 2609136 | C2 | 30 January 2017 |
| | | | | TW | 201303737 | A | 16 January 2013 |
| | | | | TW | I553559 | B | 11 October 2016 |
| | | | | US | 2012-0324578 | A1 | 20 December 2012 |
| | | | | US | 9152202 | B2 | 06 October 2015 |
| | | | | WO | 2012-173843 | A2 | 20 December 2012 |
| | | | | WO | 2012-173843 | A3 | 11 April 2013 |
| JP | 2019-091433 | A | 13 June 2019 | CN | 109664777 | A | 23 April 2019 |
| | | | | CN | 109664777 | B | 24 September 2021 |
| | | | | DE | 102018217320 | A1 | 18 April 2019 |
| | | | | JP | 7289623 | B2 | 12 June 2023 |
| | | | | US | 10800413 | B2 | 13 October 2020 |
| | | | | US | 2019-0111924 | A1 | 18 April 2019 |
| JP | 2014-128039 | A | 07 July 2014 | | None | | |
| KR | 10-2023-0069786 | A | 19 May 2023 | US | 2023-0152383 | A1 | 18 May 2023 |

Form PCT/ISA/210 (patent family annex) (July 2022)

**EP 4 550 618 A1**

**REFERENCES CITED IN THE DESCRIPTION**

**Patent documents cited in the description**

- KR 1020230081593